# EUROPEAN PATENT APPLICATION

(11) **EP 4 088 826 A1**
(43) Date of publication of application: **16.11.2022**
(21) Application number: 20912598.8
(22) Date of filing: 18.12.2020
(51) Int. Cl.: B05C 11/10, B05D 3/04, B05D 3/12, B05C 5/02, H01M 4/04, H01M 4/139, B05C 15/00

(54) **COATING DEVICE, PARTITION MEMBER, AND COATING METHOD**

(30) Priority: 06.01.2020 JP 2020000558
(71) Applicant: Nihon Spindle Manufacturing Co., Ltd., Amagasaki-shi, Hyogo 661-8510 (JP)
(72) Inventor: ONISHI, Keiichiro, Amagasaki-shi, Hyogo 661-8510 (JP); ASAMI, Keiichi, Amagasaki-shi, Hyogo 661-8510 (JP); MASUDA, Katsuhiro, Amagasaki-shi, Hyogo 661-8510 (JP); YAMAGUCHI, Masafumi, Amagasaki-shi, Hyogo 661-8510 (JP)
(74) Representative: Louis Pöhlau Lohrentz
(86) International application number: PCT/JP2020/047579
(87) International publication number: WO 2021/140888

(57) **Abstract**

An object of the present invention is to provide a coating device, a partition member, and a coating method in which it is possible to easily block contact between a coating liquid and atmospheric moisture during coating treatment in order to suppress a reaction between a coating liquid component and atmospheric moisture. Provided in order to achieve the above object are a coating device including a coating portion where coating treatment is performed, a partition portion covering the coating portion, and humidity control means for adjusting the amount of moisture in a work space partitioned by the partition portion and a coating method using the coating device, and the structure of the partition portion is also provided as a partition member. According to the present invention, it is possible to reduce the amount of moisture in the work space of the coating portion partitioned by the partition portion, and it is possible to easily block contact between a coating liquid and atmospheric moisture. In addition, by providing the partition portion, the part that requires control related to the amount of atmospheric moisture is not the entire device but only the coating portion-related work space, and thus the coating treatment can be stably performed without an increase in cost.

## Description

### Technical Field

The present invention relates to a coating device, a partition member, and a coating method. More specifically, the present invention relates to a coating device, a partition member, and a coating method in coating treatment using a coating liquid that reacts with atmospheric moisture.

### Background Art

Coating treatment for coating a base material (material to be coated) with a coating liquid is used in a wide range of fields. Known as an example is a technique for using a liquid or slurry containing a functional material as a coating liquid and coating a thin film base material with the coating liquid to obtain various products. Examples of the technique include the manufacturing of coated paper and various functional films and the fabrication of secondary battery electrodes.

Generally used in fabricating secondary battery electrodes is a device performing current collector surface coating and drying using slurry containing active materials (positive electrode active material and negative electrode active material).

For example, PTL 1 discloses a secondary battery electrode manufacturing device in which drying treatment is performed with drying equipment after coating treatment is performed with coating equipment for coating a base material (electrode foil) with a coating liquid (electrode slurry containing an active material and a conductive auxiliary agent). PTL 1 also discloses coating the base material with the active material in the slurry kept homogeneous and achieving electrode performance improvement by providing an excitation device in the secondary battery electrode manufacturing device.

### Citation List

### Patent Literature

[PTL 1] Japanese Unexamined Patent Publication No. 2014-182971

### Summary of Invention

### Technical Problem

As illustrated in PTL 1, it is known that the performance of an electrode is affected by the state of coating with a coating liquid in secondary battery electrode fabrication.

Meanwhile, in a case where coating treatment is performed, a coating liquid component may react with atmospheric moisture when a coating liquid is discharged to the atmosphere and applied to a base material. In particular, in a case where the coating liquid is electrode slurry of a secondary battery containing an active material, the performance of the post-coating treatment product (secondary battery electrode) may deteriorate and a harmful gas may be generated as a result of the active material-moisture reaction during the coating treatment.

Accordingly, in order to maintain and improve the performance of the coated product and ensure the safety of the coating treatment work, it is necessary to suppress the reaction between the coating liquid component and atmospheric moisture.

However, PTL 1 does not describe anything as to suppressing a coating liquid component-atmospheric moisture reaction when a coating liquid is discharged to the atmosphere during coating treatment.

Conceivable as an example of means for suppressing a coating liquid component-atmospheric moisture reaction is to control the environment of a dry room as a whole with a device as a whole such as the electrode manufacturing device in PTL 1 installed in the dry room. However, in a case where the entire device related to the processes of product manufacturing including coating treatment is installed in the dry room, problems arise as the initial cost increases along with the running cost related to maintaining the environment of the entire dry room.

In addition, in the case of the dry room in which the entire device is installed, it is difficult to maintain the environment of the entire space having a certain size under the same conditions and environmental (e.g. temperature and humidity) variations are inevitable at different parts in the dry room. Accordingly, necessary conditions cannot be met with respect to parts requiring environmental maintenance and management, which is another problem.

For this reason, it is required to more reliably suppress a coating liquid component-atmospheric moisture reaction using means that is simpler than installing a device as a whole in a dry room.

An object of the present invention is to provide a coating device, a partition member, and a coating method in which it is possible to easily block contact between a coating liquid and atmospheric moisture during coating treatment in order to suppress a reaction between a coating liquid component and atmospheric moisture.

### Solution to Problem

As a result of diligent studies on the above, the present inventor has completed the present invention by finding that it is possible to block contact between a coating liquid and atmospheric moisture and suppress a reaction between a coating liquid component and atmospheric moisture by providing a partition portion covering a coating portion where coating treatment is performed and adjusting the dew point temperature in the partition portion to a specific temperature or lower.

In other words, the present invention is the following coating device, partition member, and coating method.

A coating device of the present invention for achieving the above object includes: a coating portion where coating treatment is performed; a partition portion covering the coating portion; and humidity control means for adjusting the amount of moisture in a work space partitioned by the partition portion.

According to the coating device of the present invention, it is possible to reduce the amount of moisture in the work space partitioned by the partition portion by providing the humidity control means and the partition portion covering only the coating portion where the coating treatment is performed. As a result, coating treatment is performed by coating liquid release into the work space partitioned by the partition portion and reduced in moisture amount, and thus it is possible to easily block contact between the coating liquid and atmospheric moisture. In addition, by providing the partition portion, the part that requires control related to the amount of atmospheric moisture is not the entire device but only the coating portion-related space, and thus the coating treatment can be stably performed without an increase in initial or running cost.

In addition, as one embodiment of the coating device of the present invention, the humidity control means includes gas supply means for supplying inert gas to the partition portion.

According to this, the amount of air in the work space can be reduced by replacing the air (atmosphere) in the partition portion with inert gas by supplying the inert gas. As a result, the moisture in the air is also reduced and the amount of moisture in the work space can be adjusted.

In addition, as one embodiment of the coating device of the present invention, the humidity control means includes a dry air generating unit for supplying dry air to the partition portion, and exhaust gas discharged from the partition portion is returned to the dry air generating unit and reused as the dry air.

According to this, it is possible to easily adjust the dew point temperature in the partition portion to a specific temperature or lower by supplying dry air, and thus the amount of moisture in the work space is adjusted with ease. In addition, it is possible to further reduce the running cost in the coating treatment by recovering and reusing the dry air supplied to the partition portion.

In addition, as one embodiment of the coating device of the present invention, an inside of the partition portion has a positive pressure.

According to this, it is possible to suppress outside air flowing into the partition portion by maintaining the work space partitioned by the partition portion at a positive pressure. As a result, the amount of moisture in the work space is easily maintained within an appropriate range.

A partition member of the present invention for achieving the above object is a partition member for a coating device provided in a coating device provided with a coating portion where coating treatment is performed, the partition member for a coating device being for covering the coating portion and including: a main body; and humidity control means for adjusting the amount of moisture in a work space partitioned by the main body.

According to this partition member, it is possible to reduce the amount of moisture in the work space partitioned by the partition member by providing the humidity control means and covering only the coating portion where the coating treatment is performed. As a result, coating treatment is performed by coating liquid release into the work space partitioned by the partition member and reduced in moisture amount, and thus it is possible to easily block contact between the coating liquid and atmospheric moisture. In addition, by installing the partition member, the part that requires control related to the amount of atmospheric moisture is not the entire device but only the coating portion-related space, and thus the coating treatment can be stably performed without an increase in initial or running cost.

A coating method of the present invention for achieving the above object includes: a coating step of performing coating treatment; a partition step of covering a work space where the coating step is performed with a partition portion; and a humidity control step of adjusting the amount of moisture in the work space covered in the partition step.

According to this coating method, it is possible to reduce the amount of moisture in the work space partitioned by the partition portion by the partition step and the humidity control step being included. As a result, coating treatment is performed by coating liquid release into the work space partitioned by the partition portion and reduced in moisture amount, and thus it is possible to easily block contact between the coating liquid and atmospheric moisture. In addition, by the partition step, the part that requires control related to the amount of atmospheric moisture is not the entire device but only the coating treatment-related work space, and thus the coating treatment can be stably performed without an increase in initial or running cost.

### Advantageous Effects of Invention

According to the present invention, it is possible to provide a coating device, a partition member, and a coating method in which it is possible to easily block contact between a coating liquid and atmospheric moisture during coating treatment in order to suppress a reaction between a coating liquid component and atmospheric moisture.

### Brief Description of Drawings

Fig. 1 is a schematic explanatory diagram illustrating the structure of a coating device according to a first embodiment of the present invention.
Fig. 2 is a schematic explanatory diagram illustrating another aspect of the partition portion in the coating device according to the first embodiment of the present invention.
Fig. 3 is a schematic explanatory diagram illustrating the structure of a coating device according to a second embodiment of the present invention.
Fig. 4 is a schematic explanatory diagram illustrating the structure of a coating device according to a third embodiment of the present invention.

### Description of Embodiments

Hereinafter, the coating device, the partition member, and the coating method according to the present invention will be described in detail with reference to the drawings.

The coating device and the partition member described in the embodiment are exemplified for describing the coating device and the partition member according to the present invention, and the present invention is not limited thereto. The coating method of the present invention is to be replaced with the following description of the structure and operation of the coating device.

The coating treatment in the present invention may be any insofar as it is a process in which a base material (material to be coated) is coated with a coating liquid, and the technical field is not particularly limited. Examples of technical fields to which the coating device and the partition member of the present invention can be applied include the manufacturing of coated paper and various functional films and the fabrication of secondary battery electrodes.

Examples of the coating liquid of the present invention include one used in the coating treatment and containing a component reacting with atmospheric moisture. In particular, the examples include one deteriorating a function of the post-coating treatment product and one impairing work environment safety by a component of the coating liquid reacting with atmospheric moisture.

In addition, the form of the coating liquid in the present invention is not particularly limited, and examples thereof include a liquid in which a functional material is dissolved and slurry as a solid-liquid mixture.

As the coating liquid in the present invention, it is preferable to use electrode slurry containing a binder and active materials (positive electrode active material and negative electrode active material) known as electrode materials for a lithium ion secondary battery. In the electrode slurry, active material and binder components may react with atmospheric moisture. It is known that this reaction causes binder component precipitation on an electrode surface, active material decomposition, or the like, which may result in an impaired product (electrode) function or harmful gas generation. Accordingly, when the coating treatment is performed using the electrode slurry as a coating liquid, it is possible to maximize the effect of easily blocking contact between the coating liquid and atmospheric moisture by applying the coating device, the partition member, and the coating method of the present invention.

The base material in the present invention is not particularly limited insofar as it is generally used in coating treatment. For example, the material, size, and so on of the base material can be appropriately selected in accordance with the type of the coating liquid or the form of the post-coating treatment product. More specifically, in a case where the post-coating treatment product is, for example, coated paper, untreated paper may be used as the base material. In addition, in a case where the post-coating treatment product is an electrode of a lithium ion secondary battery, a known substance known as a current collector (aluminum thin film or the like) may be used as the base material.

### [First Embodiment]

### (Coating Device)

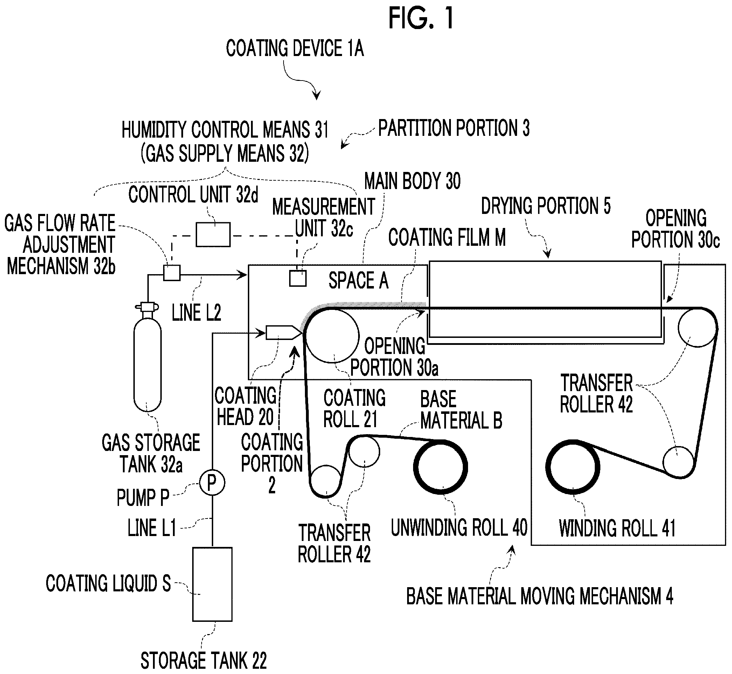

Fig. 1 is a schematic explanatory diagram illustrating the structure of a coating device according to a first embodiment of the present invention.

As illustrated in Fig. 1, a coating device 1A includes a coating portion 2, a partition portion 3, and a base material moving mechanism 4, and the partition portion 3 is installed so as to cover the coating portion 2. In addition, the partition portion 3 is provided with humidity control means 31. Further, a drying portion 5 is provided subsequent to the coating portion 2.

In the coating device 1A of the present embodiment, a base material B is introduced into the coating portion 2 by the base material moving mechanism 4, and coating treatment is performed in the coating portion 2 for the base material B to be coated with a coating liquid S. At this time, the dew point temperature in the partition portion 3 covering the coating portion 2 is adjusted to block contact between the coating liquid S and atmospheric moisture. This makes it possible to suppress a reaction between a component of the coating liquid S and atmospheric moisture during the coating treatment.

After the coating treatment is completed, the base material B is transferred to the next process by the base material moving mechanism 4. Although the content of the post-coating treatment process is not particularly limited, it is preferable that the process facilitates product quality improvement and product recovery. For example, as illustrated in Fig. 1, the base material B is introduced into the drying portion 5 from the coating portion 2 and drying treatment is performed. This makes it easy to sufficiently dry the coating liquid S on the base material B and facilitates product recovery. In addition, compression treatment by means of a compression device such as a roll press machine is an example of another process provided subsequent to the coating portion 2.

As for the coating device 1A of the present embodiment, it is preferable that the base material B is not exposed to the atmosphere during the coating treatment and until immediately before the introduction into the post-coating treatment process. More specifically, as illustrated in Fig. 1, for example, it is preferable that the base material B is covered with the partition portion 3 so as not to be exposed to the atmosphere until immediately before the introduction into the drying portion 5 from the coating portion 2. This makes it possible to suppress a reaction of atmospheric moisture with the coating liquid S on the base material B.

The base material moving mechanism 4 in the coating device 1A of the present embodiment moves the base material B in order to provide the base material B to each process, and the detailed structure of the base material moving mechanism 4 is not particularly limited. As illustrated in Fig. 1, the base material moving mechanism 4 includes, for example, an unwinding roll 40 for unwinding the base material B and a winding roll 41 for winding and recovering the base material B with a drive unit for rotationally driving the winding roll provided (not illustrated). Further, it is preferable to provide a plurality of transfer rollers 42 as a mechanism for applying an appropriate tension to the base material B and moving the base material B to form a movement path for the base material B. This makes it possible to stably move the base material B.

In the drying portion 5 in the coating device 1A of the present embodiment, drying treatment is performed to dry a coating film M with which the base material B is coated, and the detailed structure of the drying portion 5 is not particularly limited. Examples of the drying portion 5 include a drying device using hot air and a drying device using an infrared heater.

It is not essential to provide the drying portion 5 and, depending on the properties of the coating liquid S (coating filmM) or the base material B, the drying portion 5 may be omitted or equipment may be provided to perform a process other than the drying portion 5.

Hereinafter, the coating portion 2 and the partition portion 3 will be described in detail.

### (Coating Portion)

The coating portion 2 is for carrying out a coating step of performing coating treatment.

The coating portion 2 may be any insofar as the base material B can be coated with the coating liquid S, and the coating portion 2 is not particularly limited in terms of device configuration details. For example, as illustrated in Fig. 1, the coating portion 2 includes a coating head 20, a coating roll 21, a storage tank 22 for storing the coating liquid S, a line L1 for connecting the coating head 20 and the storage tank 22, and a pump P.

In the coating portion 2, the base material B passes between the coating head 20 and the coating roll 21 and is coated with the coating liquid S supplied from the storage tank 22 into the coating head 20 via the line L1 and the pump P. As a result, the coating film M is formed on the surface of the base material B. Then, with the coating film M formed, the base material B is transferred to the next process (drying portion 5) . At this time, the coating liquid S does not come into contact with the atmosphere until the coating liquid S is discharged from the coating head 20 toward the base material B, and thus it is possible to further suppress a reaction between a component of the coating liquid S and atmospheric moisture. In the coating portion 2 illustrated in Fig. 1, the coating head 20 is horizontally provided with respect to the coating roll 21, and yet the present invention is not limited thereto and the position of the coating head 20 can be appropriately changed depending on, for example, the properties of the coating liquid S (viscosity, adhesiveness to the base material B, and so on).

The specific structure of the coating head 20 in the present embodiment is not particularly limited. For example, a known structure called a die coater, a slit coater, a lip coater, or the like can be used.

In addition, the coating portion 2 may be provided with means for forming the coating film M that is homogeneous and uniform in thickness. Example of such means include means capable of finely adjusting the position of the coating head 20 (or the coating roll 21) and means capable of appropriately adjusting the amount of the coating liquid S discharged from the coating head 20. By the coating portion 2 being provided with various incidental mechanisms for implementing these means, the quality of the post-coating treatment product is managed and improved with ease.

The storage tank 22 is not particularly limited insofar as the coating liquid S can be stably stored. Examples of the storage tank 22 include a bottomed tubular structure and a pipe-shaped structure having chemical resistance and pressure resistance.

The storage tank 22 may supply gas such as carbon dioxide gas and inert gas. This makes it possible to suppress a reaction between a component of the coating liquid S and atmospheric moisture even when the coating liquid S is stored.

In particular, in a case where electrode slurry is used as the coating liquid S, an alkaline component such as lithium hydroxide may be generated during the preparation and storage of the electrode slurry. Here, it is known that the alkaline component in the electrode slurry causes corrosion of the base material B (aluminum thin film) during coating treatment. Accordingly, it is preferable to supply carbon dioxide gas into the storage tank 22. This makes it possible to neutralize the alkaline component generated in the storage tank 22 (lithium hydroxide or the like) with the carbon dioxide gas and suppress the alkalization of the electrode slurry.

In addition, a stirring mechanism may be provided in the storage tank 22. This makes it possible to stir the coating liquid S in the storage tank 22 and maintain the homogeneity of the coating liquid S. In particular, in a case where slurry as a solid-liquid mixture is used as the coating liquid S, it is preferable to provide a stirring mechanism in the storage tank 22 to maintain the homogeneity of the coating liquid S discharged during the coating treatment such that the coating liquid S does not become inhomogeneous in the storage tank 22.

### (Partition Portion (Partition Member))

The partition portion 3 is for carrying out a partition step of covering a work space where the coating treatment using the coating portion 2 is performed and a humidity control step of adjusting the dew point temperature of the work space covered in the partition step to a specific temperature or lower.

The partition portion 3 covers the work space of the coating portion 2. In addition, the partition portion 3 is capable of adjusting the dew point temperature of the covered work space of the coating portion 2.

As illustrated in Fig. 1, the partition portion 3 includes a main body 30 and the humidity control means 31.

The main body 30 covers the coating portion 2 and forms a partitioned work space A.

The main body 30 has a size at which at least the coating head 20 and the coating roll 21 in the coating portion 2 can be covered. This makes it possible to easily suppress a reaction between a component of the coating liquid S (coating film M) and atmospheric moisture.

In addition, it is preferable that the main body 30 has a size at which the base material B in addition to at least the coating head 20 and the coating roll 21 can be covered until immediately before the introduction into the drying portion 5 provided subsequent to the coating portion 2. This makes it possible to reliably partition the work space for coating the base material B with the coating liquid S in the coating portion 2 and more reliably suppress a reaction with atmospheric moisture by the environment control that is performed by the humidity control means 31.

In addition, the specific structure of the main body 30 is not particularly limited insofar as the main body 30 is capable of covering the coating portion 2 and forming the partitioned work space A. Examples of the main body 30 include using a rigid casing (e.g. steel partition) and using a flexible main body allowing a certain degree of deformation (e.g. vinyl curtain).

In addition, in order to transfer the base material B to the next process after the coating treatment, as illustrated in Fig. 1, a part of the main body 30 may be provided with an opening portion 30a for passing the base material B moved by the base material moving mechanism 4. The structure of the partition portion 3 in the present embodiment may be any insofar as the base material B can be transferred to the next process after the coating treatment and is not limited to providing the opening portion 30a in the main body 30.

As illustrated in Fig. 1, the main body 30 may be one partitioned work space A that covers the coating head 20 and the coating roll 21 and covers the winding roll 41 and the transfer roller 42 for winding and recovering the base material B dried in the drying portion 5. This makes it possible to suppress the base material B absorbing moisture even until the dried base material B is wound by the winding roll 41. In addition, by means of the one partitioned work space A, management by one humidity control means is possible and the coating device 1A can be reduced in size.

In a case where the main body 30 is one partitioned work space A that covers the coating head 20 and the coating roll 21 and covers the winding roll 41 and the transfer roller 42 for winding and recovering the base material B dried in the drying portion 5, a part of the main body 30 may be provided with an opening portion 30c for transferring the base material B dried in the drying portion 5 into the main body 30.

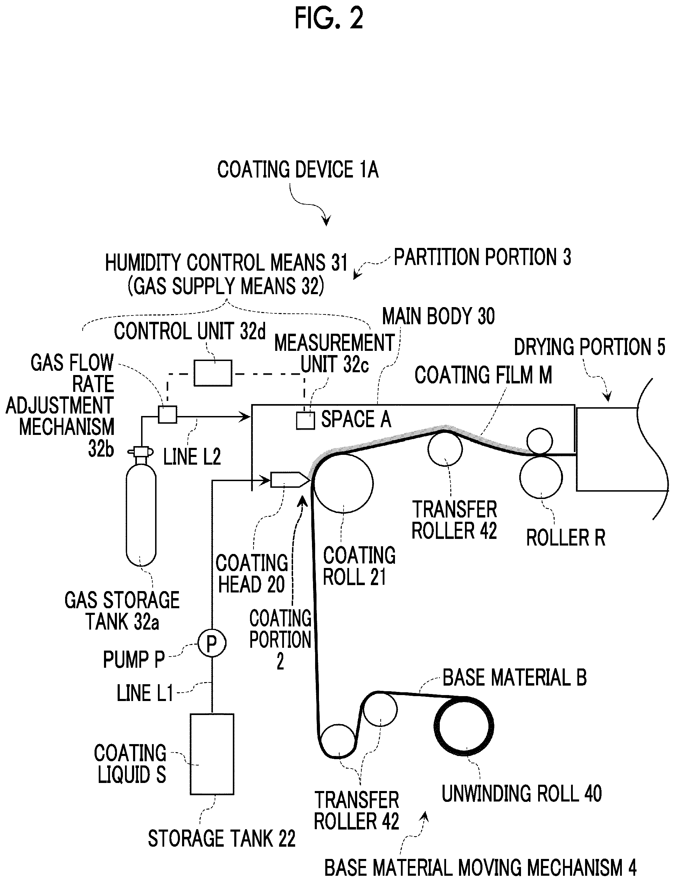

Fig. 2 is a schematic explanatory diagram illustrating another aspect of the partition portion 3 in the present embodiment. Fig. 2 is an enlarged view of the main body 30 of the partition portion 3, and the other configurations are the same as those illustrated in Fig. 1 and thus will not be described.

In the partition portion 3 illustrated in Fig. 2, instead of providing the opening portion 30a in the main body 30, the bottom portion of the main body 30 is open and the transfer roller 42 and a pair of rollers R are provided in the advancing direction of the base material B. As a result, a movement path is formed such that the base material B passes through the upper side of the space A in the main body 30, and it is possible to, for example, control the thickness of the coating film M with respect to the base material B and enhance the adhesiveness of the coating film M with respect to the base material B. At this time, even with the bottom portion of the main body 30 open, it is possible to carry out environment control in the partitioned work space A by appropriately selecting the humidity control means 31 (described later) . As a result, even in a case where the width of the base material B is changed, it is possible to carry out the coating treatment without changing the structure of the main body 30.

### (Humidity Control Means)

The humidity control means 31 adjusts the amount of moisture in the work space A partitioned by the main body 30. Means related to the moisture amount adjustment performed by the humidity control means 31 are not particularly limited. For example, the dew point temperature may be used as a reference related to the moisture amount adjustment and the humidity control means 31 may perform adjustment to the specific dew point temperature or lower. The dew point temperature in the present embodiment is the dew point temperature of water under atmospheric pressure.

It is preferable that the dew point temperature adjusted by the humidity control means 31 is appropriately set depending on, for example, the type of the coating liquid S. For example, the dew point temperature is preferably 0 degrees Celsius or lower and more preferably 20 degrees Celsius below zero or lower. In general, at a dew point temperature of 20 degrees Celsius below zero or lower, the amount of moisture contained in 1 cubic meter of air is approximately 1 gram or less, and thus it is possible to sufficiently suppress a reaction between a component of the coating liquid S and atmospheric moisture. In addition, in a case where the coating liquid S is electrode slurry, the dew point temperature is preferably 40 degrees Celsius below zero or lower and more preferably 70 degrees Celsius below zero or lower. This makes it possible to more reliably suppress a reaction between a component of the coating liquid S and atmospheric moisture and facilitates product quality management and improvement.

The humidity control means 31 in the present embodiment may be any means capable of adjusting the dew point temperature in the partitioned work space A, and the specific means are not particularly limited.

As a specific example of the humidity control means 31, gas supply means 32 for inert gas supply may be provided in the partitioned work space A as illustrated in Fig. 1. As a specific example of the gas supply means 32, a line L2 for inert gas supply and a gas storage tank 32a for inert gas storage may be provided in the partitioned work space A.

Examples of the inert gas at this time include a gas that is lower in moisture content than the atmosphere and does not react with the components of the coating liquid S (e.g. argon, neon, nitrogen, and helium). By supplying this inert gas into the partitioned work space A, it is possible to replace the atmosphere in the work space A with the inert gas and lower the dew point temperature.

In addition, it is preferable to use a gas lighter than the atmosphere as the inert gas. This makes it possible to replace the atmosphere in the work space A with the inert gas and lower the dew point temperature because gas stays in the partitioned work space A when the gas is supplied to the main body 30 having the structure that is illustrated in Fig. 2.

In addition, as for the gas supply means 32, gas flow rate adjustment mechanism 32b for adjusting the amount of inert gas supply may be provided on the line L2 as illustrated in Fig. 1. Further, a measurement unit 32c measuring the pressure or humidity in the partitioned work space A and a control unit 32d controlling the gas flow rate adjustment mechanism 32b in accordance with a value of the measurement unit 32c may be provided. The one-dot broken line in Fig. 1 indicates being connected such that input or control is possible.

For example, in a case where a value measured by the measurement unit 32c is input to the control unit 32d and it is determined as a result that a decrease in pressure or a rise in humidity has occurred in the partitioned work space A, the control unit 32d controls the gas flow rate adjustment mechanism 32b so as to increase the amount of supply of the inert gas supplied from the line L2 to the work space A. In a case where it is determined from the measured value of the measurement unit 32c that the pressure in the partitioned work space A has risen excessively, the gas flow rate adjustment mechanism 32b is controlled so as to reduce the amount of inert gas supply. As a result, it is possible to appropriately maintain the environment in the partitioned work space A.

It is preferable that the gas supply means 32 supplies inert gas such that the inside of the partitioned work space A has a positive pressure. This makes it possible to suppress atmosphere inflow into the work space A and more reliably block contact between the coating liquid S and atmospheric moisture.

In addition, the configuration according to the partition portion 3 in the present embodiment can be independent as the partition member according to the present invention. This partition member can be applied to an existing coating device provided with a coating portion. In particular, in a case where the coating liquid reacts with atmospheric moisture, it is possible to improve the function of the existing coating device without major equipment renewal by applying the partition member (partition portion 3) of the present invention to the existing coating device.

As described above, by the coating device 1A of the present embodiment and the coating method using the coating device 1A, it is possible to reduce the amount of moisture in the work space partitioned by the partition portion by providing the humidity control means and the partition portion covering the coating portion where the coating treatment is performed and adjusting the dew point temperature in the partition portion to a specific temperature or lower by the humidity control means . As a result, coating treatment is performed by coating liquid release into the work space partitioned by the partition portion and reduced in moisture amount, and thus it is possible to easily block contact between the coating liquid and atmospheric moisture in the work space where the coating treatment is performed. In addition, by providing the partition portion, the part that requires control related to the amount of atmospheric moisture is not the entire device but only the coating portion-related work space, and thus the coating treatment can be stably performed without an increase in initial or running cost.

### [Second Embodiment]

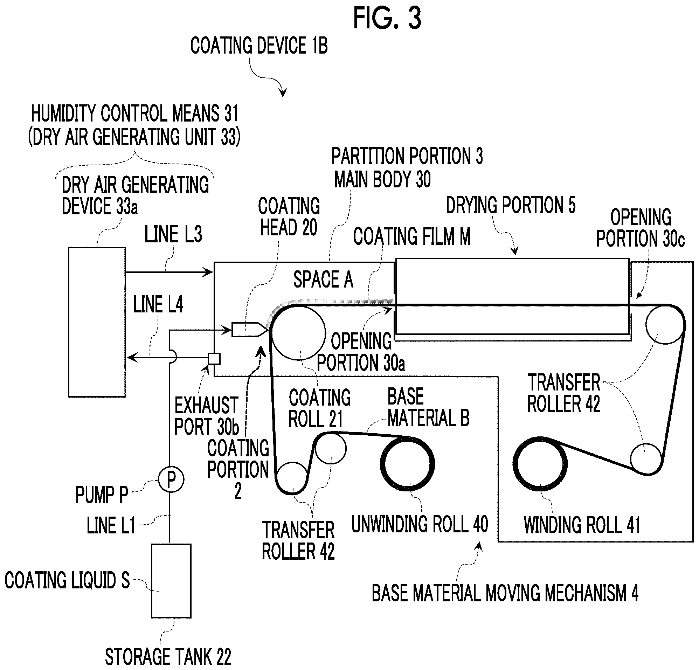

The configuration of a coating device according to a second embodiment of the present invention is schematically illustrated in Fig. 3. As illustrated in Fig. 3, a coating device 1B of the second embodiment is provided with a dry air generating unit 33 instead of the gas supply means 32 as the humidity control means 31 in the coating device 1A of the first embodiment. Configurations common to the first and second embodiments will not be described.

The coating device 1B of the present embodiment is provided with the dry air generating unit 33 supplying low-moisture content (low-humidity) air (dry air) as the humidity control means 31.

Examples of the dry air generating unit 33 include one provided with a line L3 that supplies dry air into the work space A partitioned by the main body 30 and a dry air generating device 33a that is capable of removing moisture from air to generate dry air. The specific configuration of the dry air generating device 33a is not particularly limited, and known ones may be used.

This makes it possible to adjust the dew point temperature in the space A to a specific temperature or lower and suppress a reaction between a component of the coating liquid S and atmospheric moisture. In addition, a gas procurement-related cost can be reduced as compared with the case of using inert gas.

In addition, in the coating device 1B of the present embodiment, as illustrated in Fig. 3, it is preferable to provide an exhaust port 30b in the main body 30 of the partition portion 3, return the exhaust gas from the exhaust port 30b to the dry air generating device 33a of the dry air generating unit 33 via a line L4, and reuse the gas as dry air. The exhaust gas returned via the line L4 is lower in moisture content than the normal atmosphere. Accordingly, it is possible to reduce the running cost related to dry air generation by re-supplying the returned exhaust gas to the dry air generating device 33a.

In the coating device 1B of the present embodiment, in order to efficiently supply and recover dry air, a flow rate adjustment mechanism, a pump, or the like (not illustrated) may be provided on the line L3 and/or the line L4. In addition, a measurement unit measuring the pressure or humidity in the partitioned work space A, a control unit controlling the flow rate adjustment mechanism or the pump based on the result of the measurement unit, or the like may be provided as described in the first embodiment. As a result, it is possible to appropriately maintain the environment in the partitioned work space A.

As described above, by the coating device 1B of the present embodiment and the coating method using the coating device 1B, it is possible to easily adjust the dew point temperature in the partition portion to a specific temperature or lower by providing the dry air generating unit supplying dry air as the humidity control means. In addition, it is possible to further reduce the running cost in the coating treatment by recovering and reusing the dry air used for lowering the dew point temperature in the partition portion.

### [Third Embodiment]

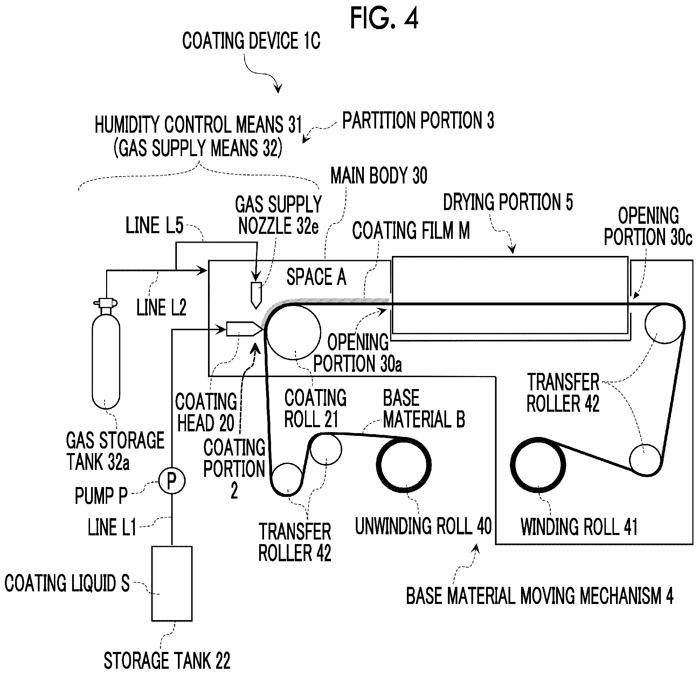

The configuration of a coating device according to a third embodiment of the present invention is schematically illustrated in Fig. 4.

As illustrated in Fig. 4, a coating device 1C of the third embodiment is provided with a gas supply nozzle 32e in the vicinity of the coating head 20 in the gas supply means 32 as the humidity control means 31 in the coating device 1A of the first embodiment. Configurations common to the first and third embodiments will not be described.

As for the coating device 1C of the present embodiment, the partition portion 3 is filled with inert gas by the line L2 and, further, inert gas is intensively supplied to a coating treatment implementation part by the gas supply nozzle 32e separately provided in the vicinity of the coating head 20. This makes it possible to more reliably block contact between the coating liquid S and atmospheric moisture.

As illustrated in Fig. 4, the gas that is discharged from the gas supply nozzle 32e may be supplied from the gas storage tank 32a via a line L5 as a branch of the line L2, and yet the present invention is not limited thereto. For example, a gas storage tank in which inert gas lower in moisture content is stored may be separately provided and gas may be supplied with the tank connected to the gas supply nozzle 32e via a line different from the line L2.

In addition, a gas flow rate adjustment mechanism may be provided on the line connected to the gas supply nozzle 32e to adjust the flow rate of the gas that is discharged from the gas supply nozzle 32e. This makes it easy to optimize the amount of gas supply in accordance with the components and properties of the coating liquid S, the state of the coating film M, and so on.

The gas supply nozzle 32e in the coating device 1C of the present embodiment may be applied to the dry air generating unit 33 in the coating device 1B of the second embodiment. As a result, the dry air that is supplied from the dry air generating unit 33 can be intensively supplied to not only the entire inside of the partitioned work space A but also the vicinity of the coating head 20 and it is possible to more reliably block contact between the coating liquid and atmospheric moisture.

As described above, in the coating device 1C of the present embodiment and the coating method using the coating device 1C, a gas supply nozzle is further provided as humidity control means, and thus it is possible to more reliably block contact between the coating liquid and atmospheric moisture and further suppress a reaction between a coating liquid component and atmospheric moisture.

The above embodiments are examples of the coating device, the partition member, and the coating method. The coating device, the partition member, and the coating method according to the present invention are not limited to the above embodiments, and the coating device, the partition member, and the coating method according to the above embodiments may be modified without changing the gist described in the claims.

For example, the coating portion in the coating device of the present embodiment is not limited to the form illustrated in Fig. 1 in which sealing is performed such that the coating liquid does not come into contact with the atmosphere until discharge from the coating head. In an alternative structure as an example, the base material may be coated with a coating liquid stored in a liquid tank or pool that is open in the atmosphere. At this time, by the partition portion (partition member) in the present embodiment covering the liquid tank or pool part as well, contact between the coating liquid and atmospheric moisture can be easily blocked during coating treatment and a reaction between a coating liquid component and atmospheric moisture can be suppressed. In particular, when the partition member in the present embodiment is applied to an existing coating device, the function of the device can be improved regardless of the structure of the coating portion in the existing coating device.

In addition, in the partition portion or the partition member in the coating device of the present embodiment, a moisture adsorber may be provided in the main body of the partition portion. At this time, an adsorbent (moisture absorbent) may be applied or an adsorption sheet (moisture absorption sheet) may be attached to a wall surface in the main body of the partition portion. This makes it possible to further reduce the moisture in the atmosphere in the work space partitioned by the main body of the partition portion.

In addition, the humidity control means in the coating device and the partition member of the present embodiment is not limited to the inside of the partitioned work space being given a positive pressure as a result of gas supply. As another example of the humidity control means, the dew point temperature in the partitioned work space may be adjusted to a specific temperature or lower by the partitioned work space being given a negative pressure (vacuumized). This makes it possible to reduce a gas supply-related cost (gas procurement cost or gas supply equipment-related cost).

In addition, in the coating device of the present embodiment, the gas that is supplied to the storage tank of the coating portion and the gas that is supplied by the humidity control means may be the same or different. In a case where the same gas is used, it is possible to reduce a gas supply-related cost. In a case where different gases are used, it is possible to select an appropriate gas in accordance with the moisture amount or cost that is allowable in each stage during the storage of the coating liquid S and the coating treatment.

### Industrial Applicability

The coating device, the partition member, and the coating method of the present invention can be used in coating with various coating liquids. In particular, the coating device, the partition member, and the coating method of the present invention can be suitably used as coating treatment for appropriately and easily applying a coating liquid that reacts with atmospheric moisture.

### Reference Signs List

- 1A, 1B, 1C: Coating device
- 2: Coating portion
- 20: Coating head
- 21: Coating roll
- 22: Storage tank
- 3: Partition portion
- 30: Main body
- 30a: Opening portion
- 30b: Exhaust port
- 30c: Opening portion
- 31: Humidity control means
- 32: Gas supply means
- 32a: Gas storage tank
- 32b: Gas flow rate adjustment mechanism
- 32c: Measurement unit
- 32d: Control unit
- 32e: Gas supply nozzle
- 33: Dry air generating unit
- 33a: Dry air generating device
- 4: Base material moving mechanism
- 40: Unwinding roll
- 41: Winding roll
- 42: Transfer roller
- 5: Drying portion
- A: Partitioned work space
- B: Base material
- L1: to L5 Line
- M: Coating film
- P: Pump
- R: Roller
- S: Coating liquid

## Claims

1. A coating device comprising:
a coating portion where coating treatment is performed;
a partition portion covering the coating portion; and
humidity control means for adjusting the amount of moisture in a work space partitioned by the partition portion.

2. The coating device according to Claim 1, wherein the humidity control means includes gas supply means for supplying inert gas to the partition portion.

3. The coating device according to Claim 1, wherein the humidity control means includes a dry air generating unit for supplying dry air to the partition portion, and
exhaust gas discharged from the partition portion is returned to the dry air generating unit and reused as the dry air.

4. The coating device according to any one of Claims 1 to 3, wherein an inside of the partition portion has a positive pressure.

5. A partition member for a coating device including a coating portion where coating treatment is performed, the partition member being provided in the coating device and covering the coating portion, the partition member comprising:
a main body; and
humidity control means for adjusting the amount of moisture in a work space partitioned by the main body.

6. A coating method comprising:
a coating step of performing coating treatment;
a partition step of covering a work space where the coating step is performed with a partition portion; and
a humidity control step of adjusting the amount of moisture in the work space covered in the partition step.
